# EUROPEAN PATENT APPLICATION

(11) **EP 3 869 381 A1**
(43) Date of publication of application: **25.08.2021**
(21) Application number: 21157474.4
(22) Date of filing: 16.02.2021
(51) Int. Cl.: G06F 40/30, G06F 40/211, G06F 40/284

(54) **PROCEDURE OF TEXTUAL DATA ANALYSIS FOR INTERPRETING EMOTIONAL STATES THAT CAN BE INFERRED FROM SAID TEXTUAL DATA**

(30) Priority: 18.02.2020 IT 202000003218
(71) Applicant: Crowdway S.r.l., 20124 Milano (MI) (IT)
(72) Inventor: DELEDDA, Dario, 07051 Budoni (IT); LA SPINA, Davide, 20099 Sesto San Giovanni (IT)
(74) Representative: Lunati & Mazzoni S.r.L.

(57) **Abstract**

It is provided a computer-implemented procedure for textual data (1) analysis for interpretating emotional states inferable from said textual data (1), wherein the textual data (1) includes one or more sentences (2) including a plurality of first lexical elements (3), and the process comprises a database including a plurality of second lexical elements (4), a plurality of emotional states (5) classified according to the Plutchik scale and a plurality of emotional values (6) and wherein are associated with at least one emotional value (6) and at least one emotional state (5) classified according to the Plutchik scale to each of the second lexical elements (4) within the database in such a way as to classify each second lexical element (4) and includes textual data (1) acquisition by acquisition means; determining for each first lexical element (3) at least a third classification parameter of the first lexical elements (3) in sentence (2) by comparing the first lexical element (3) with the second lexical elements (4) of the database; combining the emotional parameters of the textual data (1) defining an emotional vector (10) referring to said textual data (1); and processing (1i) output data including at least the emotional vector (10).

## Description

The present invention relates to a procedure of textual data analysis for interpreting emotional states that can be inferred from said textual data of the type specified in the preamble of first claim.

In particular, the analysis procedure is capable of detecting the influences deriving from the user's mood in relation to his expressive form.

As known, the expressive form of each person is strongly influenced by the emotional state of the person himself. In particular situations wherein emotional tension reaches its peak, such as states of anger or deep sadness or even excitement, it is clear to find traces of these emotional influences on the expression of the individual. For example, when in a state of anger, the individual can use a more vulgar verbal language than the common expression and can take on imperative tones to communicate his decision immediately.

However, anger, sadness or excitement are just some of the emotional states that affect the person's expression. Naturally, as a thinker and instinctual, man can define a much wider plurality of emotional states.

These emotional states have been summarily defined by the American psychologist Plutchik within a model called "Plutchik's wheel" or "Plutchik's flower".

In order to understand and precisely define these different emotional states, methods of analysis of human expression have been developed to detect the effects determined by the moods and trace the mood based on the aforementioned effects. Usually, the above methods are capable of counting the number of times wherein a particular word, relevant to the evaluation of emotional states, is present within the text.

A similar method is, for example, described in patent application KR-A-20190092810.

However, these methods are completely inaccurate and are based on an assumption that can prove to be completely misleading with respect to the actual emotional state of the user.

Furthermore, the methods such as the one just mentioned, are adequate when the moods manifest themselves in a marked way, but they are completely inadequate when the emotional state is of a lighter entity.

In this situation, the technical task underlying the present invention is to devise a procedure of textual data analysis for interpretating emotional states that can be inferred from said textual data capable of substantially obviating at least part of the aforementioned drawbacks.

Within the scope of said technical task, it is an important object of the invention to obtain an analysis procedure that is capable of detecting emotional states of various types, not only extreme ones, but also emotional states of a lighter entity.

In particular, the technical task of the present invention is to obtain an analysis procedure that is capable of evaluating any declination of human emotion. Another important object of the invention is to provide an analysis procedure that is capable of significantly increasing the accuracy of the evaluation of the user's mood, drastically reducing the possibility of erroneous interpretations of the textual information.

The technical task and the specified aims are achieved by a procedure of textual data analysis for interpreting emotional states that can be inferred from said textual data as claimed in the attached claim 1.

Preferred technical solutions are highlighted in the dependent claims.

The features and advantages of the invention are clarified below by the detailed description of preferred embodiments of the invention, with reference to the accompanying figures, wherein:

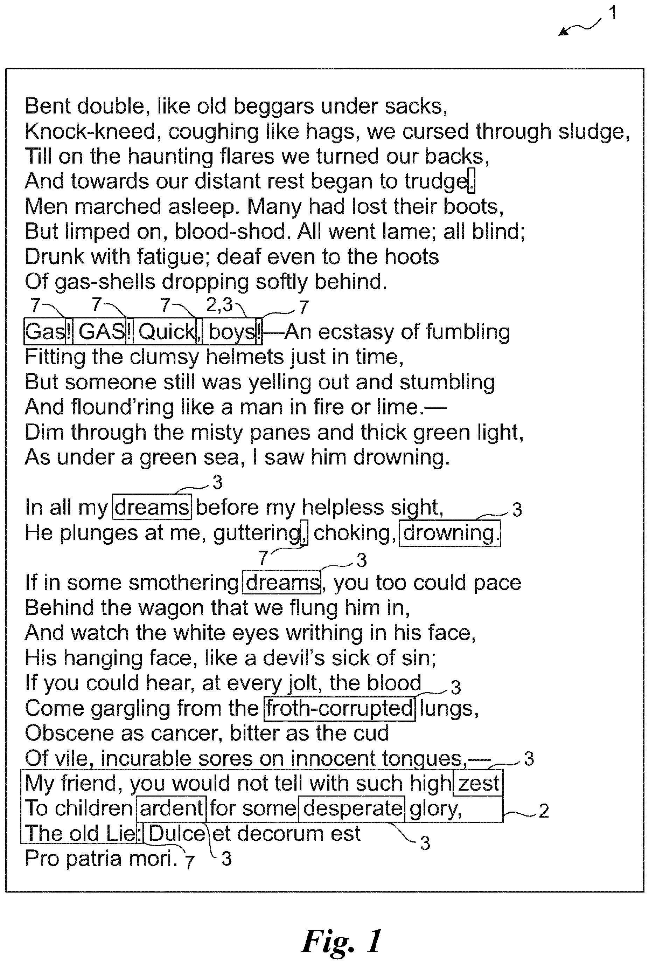

the **Fig. 1** shows an example of textual data, in particular a text wherein some punctuation marks are highlighted, phrases and lexical items processed by a process of analysis of textual data for the interpretation of emotional states can be derived from said textual data according to the invention;

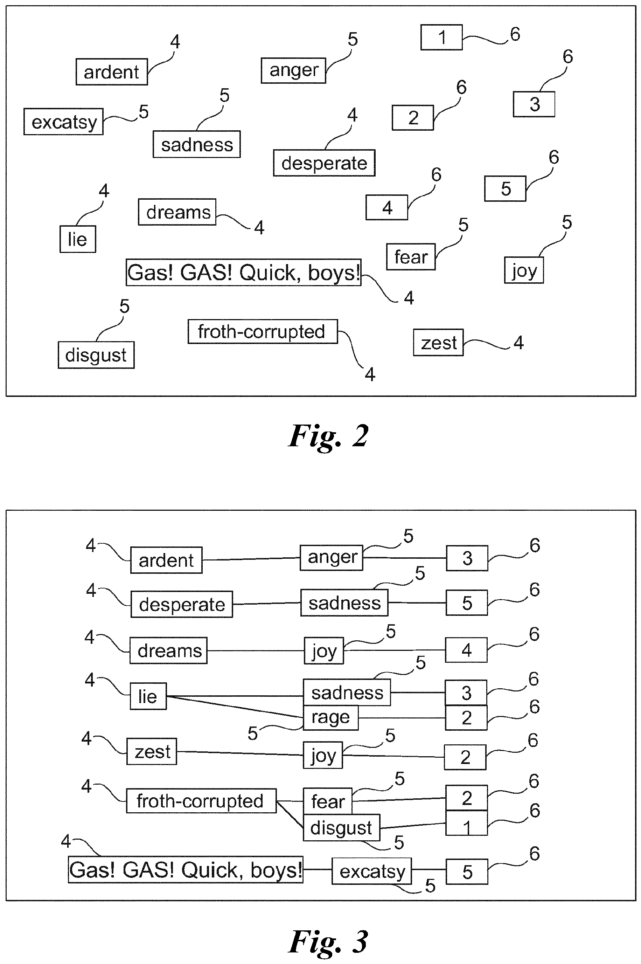

the **Fig. 2** illustrates an example of part of the contents of a database created in a procedure of textual data analysis for interpreting emotional states can be inferred from said textual data according to the invention wherein lexical items, emotional states and emotional values are not mutually associated;
the **Fig. 3** is the content of the database of Fig. 2 wherein the lexical elements, emotional states and emotional values are mutually associated in a following phase of association;

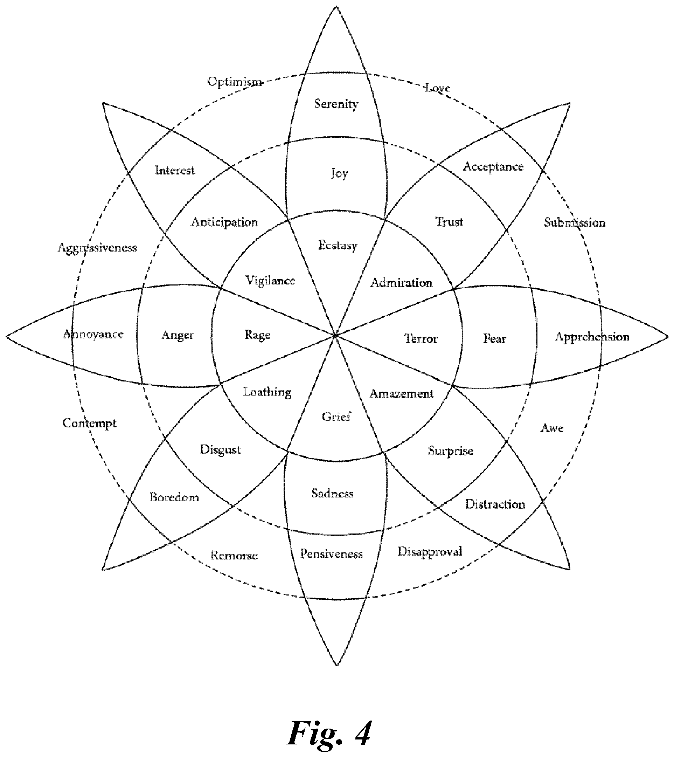

the **Fig. 4** is a wheel or flower of Plutchik that summarily describes the Plutchik scale;

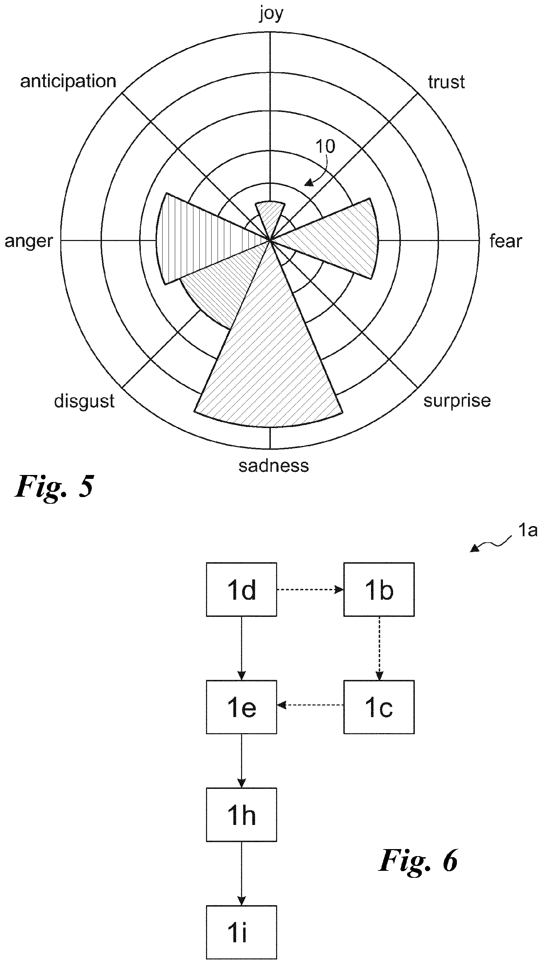

the **Fig. 5** shows an example of visualization of output data including an emotional vector obtained by means of a procedure of textual data analysis for interpretating emotional states that can be inferred from said textual data according to the invention wherein the visualization is realized through a target diagram or radar;
the **Fig. 6** illustrates a simplified diagram of a first embodiment of a procedure of textual data analysis for the interpretation of emotional states that can be inferred from said textual data according to the invention wherein there are provided a possible creation phase and subsequent association to the acquisition phase;

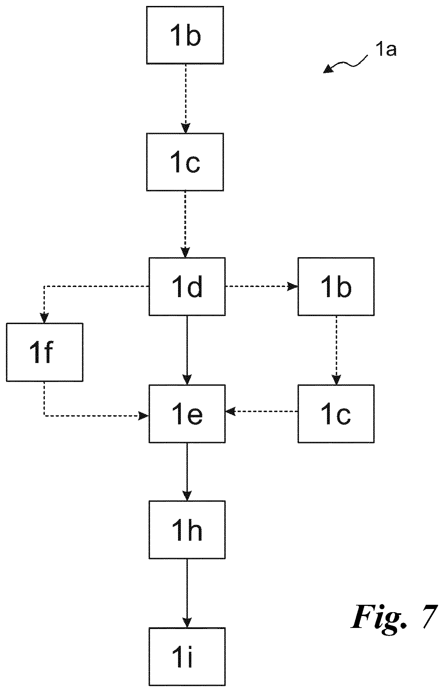

the **Fig. 7** is a simplified diagram of a second embodiment of a procedure of textual data analysis for interpreting of emotional states that can be inferred from said textual data according to the invention wherein also provided a possible creation phase and association before the acquisition phase and a possible detection phase before the determination phase;

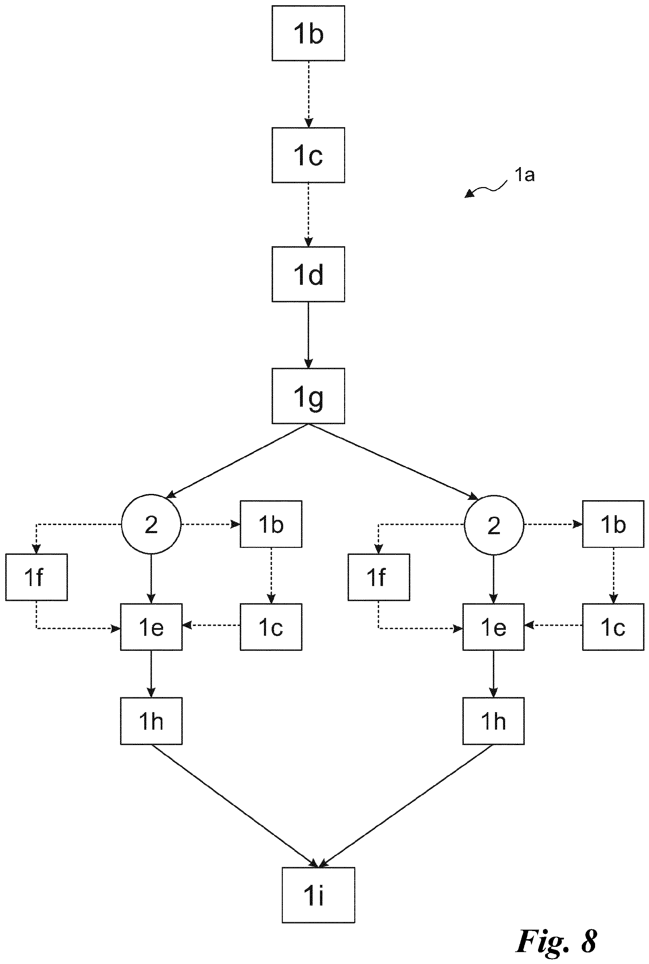

the **Fig. 8** is a simplified diagram of a third embodiment of a procedure of textual data analysis for interpreting emotional states that can be inferred from said textual data according to the invention wherein there is a subdivision phase of textual data in two sentences whose emotional vectors are calculated and then displayed together;

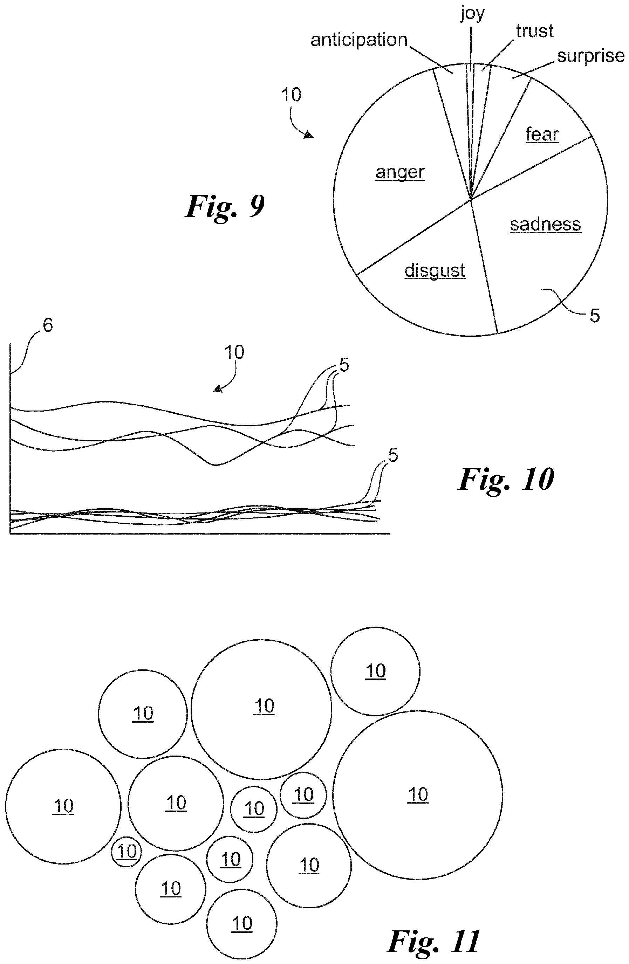

the **Fig. 9** shows an example of output display data including an emotional vector obtained through a procedure of textual data analysis for interpreting emotional states that can be inferred from said textual data according to the invention wherein the display is realized by means of a pie chart;
the **Fig. 10** illustrates an example of display of output data including an emotional vector obtained through a procedure of textual data analysis for interpreting emotional states that can be inferred from said textual data according to the invention wherein the display is realized by means of graphic which presents the trend of the emotional value on the ordinate and the temporal trend for each emotional state on the abscissa; and
the **Fig.11** is an example of display of output including a plurality of emotional vector data obtained through a procedure of textual data analysis for interpreting emotional states that can be inferred from said textual data according to the invention wherein the display is made through a bubble diagram that presents the trend of each textual data identified as a function of time.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the procedure implemented by computer, or processor, of textual data analysis for interpreting emotional states that can be inferred from said textual data according to the invention is globally indicated with the number **1a.**

With reference to the Figures, the textual data analyzed by the procedure implemented by a computer, or processor, of textual data analysis for interpreting emotional states that can be inferred from said textual data according to the invention are globally indicated with the number **1.**

Textual data 1 substantially includes text. The text may contain characters of various kinds, numeric, alpha-numeric, alphabetic or of other nature, which is in use or can be used by any user for their own free expression.

Usually, a favorite text can be created using alphabetic letters, in any language. Of course, the text can be handwritten text, on a sheet of paper or other medium. Or the text can be digitized and stored in an archive memory.

In general, preferably, the textual data 1 preferably includes at least one sentence **2.**

The term sentence 2, mainly used in the context of textual logical analysis, must not be interpreted exclusively with reference to an alphabetic text.

In fact, the term sentence 2 simply means a fragment or a string of elements that can be grouped together, separately from the rest of the text, within the text itself.

For example, sentence 2 could also include just a series of numbers or symbols that can be functionally aggregated. This aggregation can also be done simply in terms of positioning. For example, in fact, the set of abbreviations and numbers included on any credit card can be grouped according to the position wherein they are placed on the card itself. The name of the cardholder can be distinguished from the card number, which at the same time is different from the security code, usually placed on the back of the card.

Preferably, but not necessarily, the textual data 1 comprises a plurality of sentences 2.

The sentence 2 preferably includes a plurality of first lexical elements **3.**

Each lexical element 3 preferably includes one or more words or symbols or numerical figures of complete meaning which can be realized by a user.

More specifically, as commonly defined in lexicography, a lexical element can include a single word, a part of a word or a chain of words that make up the basic elements of a language's lexicon.

Examples of a lexical element can be "cat", "traffic light", "by the way" and "it's raining cats and dogs".

Furthermore, the first lexical elements 3 can coincide with portions of sentences 2 or with entire sentences 2 which can take on a more or less identifiable meaning. It is well known, in fact, that there are 2 sentences or extended expressions of the jargon of various languages that can identify a specific meaning.

As already mentioned, the method 1a according to the invention is implemented by a computer, or processor.

A computer, or processor, can be any electronic apparatus capable of processing information, preferably but not exclusively in digital format, starting from the acquisition of textual data 1.

Since textual data 1 is of various kinds, the computer or processor can be operationally connected to one or more devices or means suitable for allowing the acquisition of textual data 1 and their analysis.

In this sense, the present invention also includes a data processing system comprising means for implementing the method 1a according to the invention. Further, the present invention also includes a program for processor, or computer, comprising instructions which, when the program is executed by the processor or computer, allow the processor or computer to perform the procedure 1a.

In addition, the present invention includes a processor or computer readable storage support comprising instructions which, when executed by the processor or computer, enable the processor or computer to perform the procedure 1a.

In fact, preferably, the procedure comprises 1a at least one creation step **1b** of a database. The database is preferably accessible via the processor or computer. It can be integrated inside the processor itself (embedded), or it can be created on an external storage medium, be it physical or in the cloud, possibly connected to the processor or computer.

The database is preferably a set of information recorded for example on the storage medium described above.

The information may include both the program for processor including the algorithms for analyzing the textual data 1, and other additional information.

In particular, preferably, the database comprises second lexical elements **4.**

The second lexical elements 4 are substantially of the same nature as the first lexical elements 3. Therefore, they also can for example include a single word, a part of a word or a chain of words which constitute the basic elements of the lexicon of a language.

They may also include portions of sentences 2 or entire sentences 2 that can take on identifiable meaning.

Furthermore, the database preferably comprises a plurality of emotional states **5.** The emotional states 5 are preferably predetermined, or rather they take on a meaning which is determined before being used in the context of the analysis carried out by the procedure 1a according to the invention.

Emotional states 5 may have been defined in any manner. For example, the emotional states 5 can be manually registered by a user in the database. They can be organized according to a logic customized by the user, or they can be the result of models already widely known in the current state of the art.

Among the currently known classification models of emotional states, in particular, the wheel or flower of Plutchik is known. This wheel or flower basically summarizes a classification of emotional states according to the Plutchik scale.

An example of a Plutchik wheel is clearly shown in Fig. 4.

The predetermined emotional states 5, therefore, can be predetermined according to the classification according to the Plutchik scale.

By this it is meant that emotional states can include states such as anger, joy, fear, and others as depicted on Plutchik's wheel.

Naturally, the classification can take place according to the whole Plutchik wheel or based on part of the Plutchik wheel. In the example of results deriving from the interpretation of textual data 1 with the procedure 1a according to the invention shown in Fig. 5, the so-called eight primary emotions of the Pluitchik scale are considered.

Naturally, the use of the Plutchik scale can be varied as desired depending on the refinement with which one intends to carry out the analysis based on the predetermined emotional states 5.

The database also includes a plurality of emotional values 6.

The term emotional value 6 means any parameter, either numeric, alpha-numeric, alphabetic or of another nature, which allows to classify and distinguish an object to which it is associated with respect to other objects.

For example, as shown in Figs. 2-3, the emotional value 6 can also be a simple numerical value capable of distinguishing, on a numerical scale, an object to which it is associated within a set of other objects.

In this case, preferably, each emotional value 6 can be associated with one or more emotional states 5 in order to provide a quantitative value to the emotional state 5. In fact, preferably, the procedure comprises an association step **1c.**

In the association step 1c, at least one emotional value 6 and one emotional state 5 are associated with each of the second lexical elements 4 within the database.

In this way, each second lexical element 5 is classified.

Substantially, therefore, each second lexical element 4 is defined and characterized both qualitatively, through the emotional state 5, and quantitatively, through the emotional value 6. In this sense, the second lexical element 4 is linked to further information.

The ways in which the creation 1b and association 1c steps can take place are subsequently better specified.

Furthermore, the procedure could not include the creation steps 1b and association 1c but simply include a database already complete and compiled as previously indicated.

The procedure therefore comprises an acquisition step **1d.** In the acquisition step, preferably, the textual data 1 are acquired.

The acquisition step 1d is preferably carried out via acquisition means.

The acquisition means are preferably operatively connected to the processor or computer in such a way as to be able to communicate with it. The connection can be a physical connection, or a wireless connection, or other connection capable of allowing the functional connection between the processor or computer and the acquisition means.

The acquisition means can be of various kinds. They may be, for example, means capable of allowing the user to type on a storage support of textual data 1. An example of such acquisition means can be given by a simple keyboard.

Alternatively, the acquisition means could also be optical apparatuses, for example scanners, suitable for scanning an object, for example a sheet on which textual data 1 is indicated, in such a way as to acquire the textual data 1 present on the scanned object. Alternatively, the acquisition means could also be speech apparatuses capable of converting the data, in the form of sounds, of the voice of one or more users into digital textual data 1.

Naturally, any algorithms for interpreting the scanned data in order to return usable textual data 1, preferably digitized, to the processor or computer, are included and part of the acquisition means.

The acquisition step 1d is preferably carried out after the creation steps 1b and association 1c.

However, the procedure 1a according to the invention provides that the acquisition step 1d can be carried out prior to the creation step 1b and association 1c or, in other words, that the acquisition step 1c is part of the creation step 1b.

In fact, from the acquisition 1d, the processor or computer extrapolates the textual data 1 and also the sentences 2 and the first lexical elements 3 that compose it.

If a first lexical element 3 does not have a corresponding and coincident second lexical element 4 on the database, this first lexical element 3 can be registered on the database in such a way as to define a corresponding second lexical element 4 on the database. Subsequently, the association 1c can be made manually by the user itself.

In fact, the procedure 1a allows to substantially enter new second lexical elements 4 and to associate to the new second lexical elements 4 at least an emotional state 5 and an emotional value 6.

As previously anticipated, and considering what has just been described, examples of creation 1b methods of the database and relative association 1c.

In a practical sense, for example, the database can be generated, in the creation step 1b, from a dataset of second lexical elements 4 labeled by hand, possibly after acquisition 1d of first lexical elements 3, wherein a series of users provide an emotional value 6 to every second lexical element 4 for every single emotional state 5 found.

Once the dataset has been obtained, statistical processing is performed based on the use of the first lexical elements 3, which determine the second lexical elements 4 recorded on the database, in the single sentences 2, or coinciding with sentences 2, and to each first lexical element 3 or 2 sentence particularly recurring.

It can be associated, as already described, to each second lexical element 4 or sentence 2 at least an emotional state 5 and an emotional value 6 following the indications of the users who, in fact, train the processor to interpret the second lexical elements 4.

The database thus obtained can be used in the processing system.

Substantially, therefore, the creation 1b and association 1c can, as shown, also be subsequent to the acquisition 1d.

Furthermore, the second lexical element 4 searched starting from the first lexical element 3, can be the result of processing by a recurrent neural network, or RNN, even or without the possibility of using the algorithm rules present in the database. It is important to specify again that procedure 1a can be fully or partially implemented through algorithms and databases preconfigured by a user, or it can be implemented entirely or in part through logic, typical of artificial intelligence, of machine learning, for example through neural networks of various kinds, wherein the textual data 1 and database analysis model is not defined a priori, but is deduced step by step from artificial intelligence.

In particular, the creation phase 1b and association 1c can be carried out in a way shared by users and artificial intelligence, at least initially, allowing the artificial intelligence to define its own model for analyzing the datasets introduced in the databases. Once this learning is finished, the artificial intelligence can acquire, in the acquisition step 1d, any textual data 1. For example, the artificial intelligence may be able to independently associate emotional states 5 and emotional values 6 to first lexical elements 3 that do not find full correspondence with the second lexical elements 4, on the basis of any similarities and in correspondence with the model of interpretation learned during learning or training.

Therefore, creation step 1b, association 1c, and possibly acquisition, can contribute to defining, at least in principle, a training phase of the processor or computer where provided with artificial intelligence.

Preferably, in any case, the method comprises a determination step 1e at least one parameter relating to each first lexical element 3.

Preferably, the method 1a determines at least a third parameter.

The third parameter is a parameter that contains information relating to the emotional classification of the first lexical element 3 acquired from the textual data 1 in analysis.

In particular, the third parameter defines the classification of the first lexical element 3 in sentence 2 by comparing the first lexical element 3 with the second lexical elements 4.

Basically, once acquired, in the acquisition 1d, the first lexical element 3, the processor or computer searches for the corresponding second lexical item 4 in the database.

Once the corresponding or coincident second lexical element 4 has been found, the determination 1e of the third parameter takes place by associating the additional information of the second lexical element 4, or rather emotional state 5 and emotional value 6, to the first lexical element 3.

If the emotional states 5 are predetermined on the basis of the Plutchik scale, then the third parameter is associated with a classification according to the Plutchik scale. The third parameter may not be the only parameter determined during the determination step.

The procedure 1a preferably allows to determine, in the determination step 1d, also a first and a second parameter.

These first and second parameters can be determined starting from particular characteristics, for example statistics, of the first lexical elements 3 within sentences 2.

Preferably, the first parameter is linked to the position of the first lexical element 3 in sentence 2. The second parameter is, on the other hand, preferably linked to the quantity of first lexical elements 3 within sentence 2.

In order to carry out the determination of the first and second parameters, preferably, the procedure 1a comprises a further detection step **1f**.

If present, the detection step 1f is preferably prior to the determination step 1d.

In the detection step 1f, the portion of the first lexical elements 3 is detected in the step 2 and the quantity of the first lexical elements 3 in the sentence 2.

This detection step 1f can be carried out by the acquisition means and the processor. The counting of the first lexical elements 3 can be carried out by a common counter implemented in the processor or computer, the evaluation of the position can be carried out through the use of optical means and/or analysis of the data strings acquired digitally by the processor or computer.

In any case, if the first parameter and the second parameter are detected, in the determination step 1e the first parameter is determined by associating at least one emotional value 6 and at least one pre-determined emotional state 5 to the position. The second parameter is determined by associating at least one emotional value 6 and at least one predetermined emotional state 5 to the quantity.

This determination step 1e can be carried out by the processor or computer through the use of a recurrent neural network or RNN.

Other parameters of interest could be added to the first, second and third parameters.

For example, the procedure 1a could comprise a subdivision step **1g**.

In fact, as described, the procedure 1a allows to preferably analyze at least one sentence 2, even just one, and/or at least a first lexical element 3, even just one. However, the procedure 1a likewise allows to analyze entire textual data 1 comprising a plurality of sentences 2.

Preferably, in the subdivision step 1g, the textual data 1 are divided in such a way as to isolate each sentence 2. This subdivision is preferably carried out after the acquisition 1d.

Furthermore, after the subdivision step 1g, preferably for each sentence 2, the determination step 1e is carried out, for example the parameters relating to the classification of the predetermined emotional state are determined.

If present, the detection step 1f is also carried out subsequently, for example the position and quantity of the words are checked.

In the subdivision step 1g, even more in detail, some additional characteristics of the textual data 1 can be extrapolated. Preferably, in particular, the arrangement of punctuation marks **7** is detected.

The punctuation marks 7, as known, are typically signs of separation between propositions or parts of propositions.

Preferably, the procedure 1a detects the arrangement of the punctuation marks 7, during the subdivision step 1g, used in the textual data 1 between the isolated sentences 2. Preferably, following this reworking, the method 1a can determine a fourth parameter.

The fourth parameter is substantially determined, preferably during the subdivision phase 1g, possibly also associating punctuation arrangements 7 emotional states 5 and at least one emotional value 6.

The subdivision step 1g is preferably carried out by the processor or computer. In particular, it is realized through a convolutional neural network or CNN

In particular, the neural network is preferably specially trained, depending on the language of the text, to separate sentences 2 of textual data 1 without being confused by aesthetic or functional punctuation such as lists of first 3 lexical items separated by commas or periods used in abbreviations or other similar items.

The sentence 2 separation or sentence 2 edge discovery algorithm can be implemented with various deep learning technologies known to the current state of the art.

An example of organizing a suitable algorithm is cited in S. Schweter and S. Ahmed, "Deep-EOS: General-Purpose Neural Networks for Sentence Boundary Detection" in Proceedings of the 15th Conference on Natural Language Processing (KONVENS), 2019*.*

In any case, the fourth parameter is entirely optional and does not in any way prejudice the correct and precise functioning of the procedure 1a.

In fact, if the textual data are acquired by voice dictation, the distribution of punctuation 7 may be inaccessible for the computer without consequences on the correct functioning of the procedure 1a.

In addition to what has already been described, the procedure 1a can allow the determination, in the determination step 1e, of a fifth parameter.

If necessary, procedure 1a allows, in the detection step 1f, to detect the grammatical class for each first element 3 in sentence 2. The detection step 1f could also allow to detect even the grammatical class only, without the position and quantity of the lexical elements 3.

In particular, if the grammatical class of the first lexical elements is detected, the procedure 1a determines, in the determination step 1e, the fifth parameter.

The fifth parameter is determined by associating to the grammar class at least one emotional value 6 and at least one predetermined emotional state 5.

The association can be, also in this case, realized through a recurrent neural network or RNN.

The grammatical analysis of textual data 1, in particular of the first lexical elements 3, is known in the scientific sector with the English name of PoS (Part-of-Speech tagging) and can be performed with deep learning models of the aforementioned RNN type. For example, two layers or levels of LSTM cells can be used that analyze the input sentence in a bidirectional way and are called BiLSTM for this, that is, bidirectional LSTM cells.

An example of schematization as just described is cited in Multilingual Part-of-Speech Tagging with Bidirectional Long Short-Term Memory Models and Auxiliary Loss" Barbara Plank, Anders Søgaard, Yoav Goldberg arXiv: 1604.05529 2016*.*

The algorithms just mentioned can also be used favorably for the determination of first and second parameters.

Of course, however, the described schemes and logics are not the only ones that can be used, but are simple examples of implementation of operating algorithms at the basis of currently known convolutive or recurrent neural networks.

In any case, following determination 1e, the procedure 1a preferably comprises a combination step **1h**.

In the combination step 1h, the emotional parameters of the textual data 1, referring to first lexical elements 3, sentences 2, arrangement of punctuation 7 and/or more, are combined in such a way as to create an emotional vector 10.

The emotional vector 10 is substantially referred to the textual data 1, in particular to at least a first lexical element 3, in at least one sentence 2.

In order to realize the combination 1h, the parameters used can include only the third parameter, or the first, second and third parameters, or third parameter and fourth parameter, or also first, second, third and fourth parameters, or third and fifth parameters or all parameters.

Basically, all combinations of parameters can be used as desired.

The emotional vector 10 is basically the summary of the emotional states 5 and emotional values 6 of the entire textual data 1.

In order to be realized, it can be the result of a mere sum of emotional states 5 wherein the weights of the individual emotional states correspond to the sum of the emotional values 6 referred to the corresponding emotional states 5.

The single emotional states 5 are preferably at least defined by the eight primary emotions of the Plutchik scale, as previously described. Thus, the emotional vector 10 includes all the components of Plutchik's model individually modulated in terms of intensity.

The fact of using all eight primary emotions, possibly weighed by the emotional values 6 associated with each emotional state 5, allows for an extremely complete and timely analysis of the emotional states 5 wherein no relevant information is lost. Usually, in fact, as occurs in methods that include VAD-type models, such information is lost or distorted due to the fact that some emotions are approximated to the point of leading to the superimposition of different emotions synthesized in a single gross vector.

The combination 1h can also be carried out by constructing an emotional matrix including strings, for example lines, of parameters of the single sentences 2 in the same order wherein they are present in the textual data 1 acquired.

A determined weight is then preferably applied to the matrix, in particular, by the fourth parameter extracted from the database and the weighted average of the strings is calculated. This calculation is simply implementable with any processor or computer.

The emotional vector 10 is therefore the result of the aforementioned computation. Furthermore, the method 1a comprises a processing step **1i**.

In the processing step, preferably, output data including at least the emotional vector 10 are processed.

The term processing means, in a broad way, to compose the collected elements, in this case at least one emotional vector 10, to order and develop data of various kinds through more or less complex calculation procedures.

This processing is preferably carried out by the computer or processor on which the method 1a is implemented.

The organization of data through computerized systems through input data transformed into usable output data is widely known in the current state of the art. The output data can therefore be of various kinds. Preferably, they are digital data in any format that allows, for example, the display or recording on a storage medium or forwarding, via internet networks, to cloud systems or similar.

Of course, if the method 1a provides for the analysis of textual data 1a comprising a plurality of sentences 2, the output data is preferably realized by including the combination of the emotional vectors 10 of the various sentences 2.

In general, the output data can include a digital data string suitably configured to facilitate the consultation of at least one emotional vector 10.

In conclusion, in fact, the process 1a preferably, but not necessarily, comprises a displaying step **1j.**

In the displaying step 1j, preferably, the output data are displayed on a display medium.

The display support, like the acquisition means, is preferably operationally connected to the processor or computer.

In particular, it can be connected with any technology known to the current state of the art, can be a physical or wireless connection or similar.

The acquisition means can also simply include a screen, even a simple monitor, or other support that can allow the user to view or consult the output data.

The output data, as already mentioned, can comprise one or more emotional vectors 10 combined, or not, with each other.

An example of display 1i of the output data is represented in Fig. 5.

As evident, the output data including, in this case, an emotional vector 10 can be represented within a target diagram, or radar, but could also be represented in other types of diagrams in different ways.

For example, the output data could be represented in graphs of different types, such as pie or donut charts, as for example shown in Fig. 9.

Or, the output data could be organized in even more detail in graphs that define the time course of the emotional value 6 associated with the various emotional states 5, as shown in Fig. 10.

A further comparative displaying 1j of the output data can be carried out by means of bubble diagrams as shown in Fig. 11.

Such diagrams can include even the comparison of the outcomes of a plurality of associated and separately identified textual data 1, wherein each bubble has dimensions dependent on the emotional value 6 of the dominant emotional state 5 for each textual 1 datum.

Also the bubble diagram, for example, it can be defined over a long period of time in such a way as to precisely define the trends of the various emotional states 5 associated with the relative textual data 1.

The access to the output data can also be achieved with alternative methods to the visualization and, in this sense, the displaying step 1j can be replaced by a generic access phase wherein the output data are reproduced by access means. Examples of alternative access means to the displaying means can be audio devices or other devices capable of allowing one or more users to access the output data.

The operation of the procedure 1a implemented by a computer, or processor, of textual data analyzing for interpretating of emotional states that can be inferred from said textual data previously and of the system previously described in structural terms is as follows.

Through the connected system and procedure 1a it is possible to acquire textual data 1 of a user and to extrapolate the emotional vector 10 determined by the analysis and interpretation of the information of the emotional states 5 as classified by the parameters.

Once the emotional vector 10 is displayed, it is possible to define, with a good approximation, the emotional state of the user who created the textual data 1 analyzed.

The procedure 1a implemented by a computer, or processor, for textual data analysis for the interpretating emotional states that can be inferred from said textual data according to the invention, the processing system according to the invention, the computer program according to the invention and the computer readable storage support according to the invention, in particular including at least the database, achieves important advantages.

In fact, they make it possible to detect emotional states of various types, not only extreme, but also emotional states of a lighter entity. In fact, the characterization of emotional states is very detailed and favors the understanding of every declination of human emotion.

The procedure, especially with respect to what is already known, guarantees a significant increase in the precision relating to the assessment of the user's state of mind, drastically reducing the possibility of erroneous interpretations of the information present in the textual data 1.

In any case, the procedure is especially effective in certain application areas.

For example, in the medical sector, the present procedure and connected system, allows to effectively understand the emotional state of the user in question and, if the user is following a therapeutic path that involves taking drugs with an impact on the mood of the user, allows to detect the actual impacts of the drug on the user.

In the financial or commercial sector, the related procedure and system can provide important predictive data relating to the mood or "mood" of the subjects of interest in the context of the commercial or financial actions to be undertaken.

For example, with reference to the bubble diagram of Fig. 11, each textual data can be associated with a brand or a company or share and the diagram can represent the overall trend of the users' attitude towards the various brands or companies or shares based on textual data 1 provided by users identified for each brand or company or shares over time.

The invention is susceptible of variants falling within the scope of the inventive concept defined by the claims.

For example, it is possible to modify the algorithms for determining the various parameters. Furthermore, the associations of emotional states 5 and emotional values 6 to the various second lexical elements 4 can be modified, for example manually by the user. The database, in general, is highly manipulable according to needs.

In this context, all the details can be replaced by equivalent elements and the materials, shapes and dimensions can be any.

## Claims

1. A procedure implemented by textual data analysis computers (1) for interpreting emotional states that can be inferred from said textual data (1),
- said textual data (1) including one or more sentences (2) including a plurality of first lexical elements (3),
- said procedure being **characterised in that** it comprises:
- a database including a plurality of second lexical elements (4), a plurality of emotional states (5) classified according to the Plutchik scale and a plurality of emotional values (6) wherein at least one said emotional value (6) and at least one said emotional state (5) classified according to the Plutchik scale is associated with each of said second lexical elements (4) within said database in such a way as to classify each said second lexical element (4);
- acquiring said textual data (1) using acquisition means;
- determining for each said first lexical element (3) at least a third parameter classification of said first lexical elements (3) in said sentence (2) by comparing said first lexical element (3) with said second lexical elements (4) in said database;
- combining said emotional parameters of said textual data (1) defining an emotional vector (10) referring to said textual data (1); and
- processing (1i) output data including at least said emotional vector (10).

2. The procedure (1a) according to claim 1, comprising displaying (1j) said output data on a display medium.

3. The procedure according to claim 1, comprising creating (1b) said database and associating (1c) at least one said emotional value (6) and at least one said predetermined emotional state (5) with each of said second lexical elements (4) within said database.

4. The procedure according to any of the previous claims, comprising, in addition, detecting (1f) at least one position of said first lexical elements (3) in said sentence (2) and a quantity of said first lexical elements (3) in said sentence (2), and wherein, in said determining step (1e), at least one first parameter, wherein said position is associated with at least one said emotional value (6) and with at least one said emotional state (5), classified according to the Plutchik scale; and a second parameter, wherein said quantity is associated with at least one said emotional value (6) and with at least one said emotional state (5), classified according to the Plutchik scale, are also determined for each first lexical element (3).

5. The procedure according to any of the previous claims, wherein said textual data (1) comprise a plurality of said sentences (2) and said procedure additionally comprises subdividing (1g), after acquisition (1d), said textual data (1) in such a way as to isolate each of said sentences (2), to make, for each of said sentences (2), said detection (1f), said determination (1e), and said combination (1h), and processing (1i) said output data including the combination of said emotional vectors (10) of said sentences (2).

6. The procedure (1a) according to claim 4, wherein in said subdividing step (1g), the arrangement of punctuation marks (7) used in said textual data (1) between said isolated sentences (2) is detected, and a fourth parameter is determined wherein at least one said emotional value (6) and at least one said predetermined emotional state (5) is associated with said arrangement.

7. The procedure (1a) according to claim 5, wherein in said subdividing step said fourth parameters are determined using a convolutional neural network.

8. The procedure (1a) according to any of the previous claims, wherein in said detecting step (1f) a grammatical class is detected for each of said first lexical elements (3) in said sentence (2) and in said determining step (1e) a fifth parameter is determined wherein said grammatical class is associated with at least one said emotional value (6) and at least one said predetermined emotional state (5).

9. The procedure (1a) according to claim 7, wherein, in said determination, said fifth parameters are determined using a recurrent neural network.

10. A data processing system comprising means for implementing a procedure (1a) according to any of the previous claims.

11. A computer program comprising instructions that, when the program is executed by said computer, enable the computer to execute a procedure (1a) according to any one of claims 1-7.

12. A computer-readable storage medium comprising instructions that, when executed by said computer, enable said computer to execute a procedure (1a) according to any one of claims 1-8.
